# EUROPEAN PATENT APPLICATION

(11) **EP 4 810 283 A1**
(43) Date of publication of application: **23.09.2026**
(21) Application number: 24895539.5
(22) Date of filing: 11.06.2024
(51) Int. Cl.: B60H 1/32, B60H 1/00, B60L 58/26

(54) **COOLING SYSTEM AND CONTROL METHOD THEREFOR, AND NEW ENERGY VEHICLE**

(30) Priority: 27.11.2023 CN 202311613652
(71) Applicant: Yinwang Intelligent Technologies Co., Ltd., Shenzhen, Guangdong 518110 (CN)
(72) Inventor: JIANG, Zhengxin, Shenzhen, Guangdong 518129 (CN); CHEN, Fenfang, Shenzhen, Guangdong 518129 (CN); WANG, Deyuan, Shenzhen, Guangdong 518129 (CN)
(74) Representative: Pfenning, Meinig & Partner mbB
(86) International application number: PCT/CN2024/098519
(87) International publication number: WO 2025/112433

(57) **Abstract**

Provided are a refrigeration system, a control method therefor, and a new energy vehicle. The refrigeration system includes: a refrigeration loop (120), a drive motor (110), a first transmission apparatus (130), and a first power disengagement apparatus (140). The refrigeration loop (120) includes a refrigeration motor (121) and a compressor (122). The refrigeration motor (121) engages the compressor (122), and the refrigeration motor (121) may drive the compressor (122) to operate. The drive motor (110) is a power mechanism of a new energy vehicle, and may be configured to drive an axle (210) and a wheel (220) to rotate, thereby driving the new energy vehicle to travel. Output power of the drive motor (110) is greater than output power of the refrigeration motor (121). The drive motor (110) is in transmission engagement with the compressor (122) in the refrigeration loop (120) through the first transmission apparatus (130), and an engagement status between the drive motor (110) and the compressor (122) may be configured through the first power disengagement apparatus (140). For example, the first power disengagement apparatus (140) may cause the drive motor (110) and the compressor (122) to be in a transmission engagement state or out of a transmission engagement state.

## Description

This application claims priority to Chinese Patent Application No. 202311613652.8, filed with the China National Intellectual Property Administration on November 27, 2023 and entitled "REFRIGERATION SYSTEM, CONTROL METHOD THEREFOR, AND NEW ENERGY VEHICLE", which is incorporated herein by reference in its entirety.

### TECHNICAL FIELD

This application relates to the field of new energy vehicle technologies, and in particular, to a refrigeration system, a control method therefor, and a new energy vehicle.

### BACKGROUND

With continuous development of battery technologies and charging technologies of new energy vehicles, battery capacities and charging power are increasingly high. In a charging process, especially a fast charging process, a battery generates a large amount of heat, posing a requirement on a heat dissipation capability of a battery cooling loop of a new energy vehicle. Currently, the battery cooling loop employs a refrigeration motor to drive a compressor to perform refrigeration. Because power of the refrigeration motor is limited, a heat emission problem due to high charging power cannot be resolved.

### SUMMARY

This application provides a refrigeration system, a control method therefor, and a new energy vehicle, to resolve a problem that a heat dissipation capability of a cooling loop of a battery cannot satisfy a requirement in a charging scenario.

According to a first aspect, an embodiment of this application provides a refrigeration system, including: a refrigeration loop, a drive motor, a first transmission apparatus, and a first power disengagement apparatus. The refrigeration loop includes a refrigeration motor and a compressor. The refrigeration motor engages the compressor, and the refrigeration motor may drive the compressor to operate. The drive motor is a power mechanism of a new energy vehicle, and may be configured to drive an axle and a wheel to rotate, thereby driving the new energy vehicle to travel. Output power of the drive motor is greater than output power of the refrigeration motor. The drive motor is in transmission engagement with the compressor in the refrigeration loop through the first transmission apparatus, and an engagement status between the drive motor and the compressor may be configured through the first power disengagement apparatus. For example, the first power disengagement apparatus may cause the drive motor and the compressor to be in a transmission engagement state or out of a transmission engagement state.

In the refrigeration system provided in this embodiment of this application, the drive motor configured to drive the vehicle to travel may engage the compressor in the refrigeration loop through the first transmission apparatus, and the first power disengagement apparatus may configure the drive motor to be in transmission engagement with the compressor or to disengage the transmission engagement with the compressor. In a charging case or the like in which a battery generates a large amount of heat and a heat dissipation capability of the refrigeration loop cannot satisfy a requirement, the drive motor having larger power may be used to drive the compressor in the refrigeration loop to perform refrigeration, thereby improving refrigeration power and the heat dissipation capability.

In a possible implementation, the refrigeration system further includes a second transmission apparatus. The drive motor is in transmission engagement with an axle through the second transmission apparatus, and a wheel may be mounted on the axle. The drive motor is in transmission engagement with the axle through the second transmission apparatus, and may drive the axle and the wheel to rotate, thereby driving the vehicle to travel.

In a possible implementation, the refrigeration system further includes a second power disengagement apparatus, and the second power disengagement apparatus is configured to cause the drive motor and the axle to switch between a transmission engagement state and a transmission disengagement state. For example, in a charging scenario, the drive motor engages the compressor in the refrigeration loop through the first transmission apparatus, and the drive motor rotates to drive the compressor to operate. In this case, if the drive motor is in transmission engagement with the axle, the axle is also driven to rotate to drive the vehicle to travel. Therefore, in this case, to ensure safety, the second power disengagement apparatus may disengage the transmission engagement between the drive motor and the axle, to prevent the drive motor from driving the axle to rotate while the drive motor is driving the compressor.

In a possible implementation, the second power disengagement apparatus is disposed between the drive motor and the second transmission apparatus. In this way, the drive motor can be disengaged from the second transmission apparatus, to prevent the drive motor from driving the axle to rotate while the drive motor is driving the compressor.

In a possible implementation, the second power disengagement apparatus is disposed between the second transmission apparatus and the axle. In this way, the drive motor can be disengaged from the axle, to prevent the drive motor from driving the axle to rotate while the drive motor is driving the compressor.

In a possible implementation, the refrigeration system further includes a third transmission apparatus and a third power disengagement apparatus, and the refrigeration motor is in transmission engagement with the compressor through the third transmission apparatus. The third power disengagement apparatus is configured to cause the refrigeration motor and the compressor to switch between a transmission engagement state and a transmission disengagement state. After the third power disengagement apparatus is disposed, in some circumstances, the refrigeration motor can be disengaged from the compressor, to prevent the drive motor from driving the refrigeration motor to rotate while the drive motor is driving the compressor.

In a possible implementation, transmission manners of the first transmission apparatus and the second transmission apparatus include gear transmission, chain transmission, or belt transmission. A proper transmission manner may be selected according to an actual requirement.

According to a second aspect, an embodiment of this application further provides a control method for a refrigeration system. The control method includes: When a temperature of a battery is higher than a first temperature threshold and a temperature of a drive motor is lower than a second temperature threshold, a first power disengagement apparatus configures the drive motor and a compressor to switch to a transmission engagement state; and when the drive motor is in transmission engagement with the compressor, the drive motor drives, based on a specified rotational speed, the compressor to operate. According to the solution provided in this embodiment of this application, in a charging case or the like in which the battery generates a large amount of heat and a heat dissipation capability is insufficient, the drive motor engages the compressor in a refrigeration loop, and the drive motor drives the compressor to perform refrigeration, thereby improving refrigeration power and the heat dissipation capability.

In a possible implementation, before the drive motor drives the compressor to operate, the method further includes: When the drive motor is in transmission engagement with an axle, a second power disengagement apparatus disengages the transmission engagement between the drive motor and the axle. If the drive motor engages the axle, the drive motor also drives the axle and a wheel to rotate while the drive motor is driving the compressor. However, in a charging scenario or the like, a safety risk may exist if a vehicle travels. Therefore, before the drive motor drives the compressor to operate, whether the drive motor engages the axle needs to be detected. If the drive motor engages the axle, the second power disengagement apparatus controls the drive motor and the axle to be out of the transmission engagement state, thereby ensuring that the drive motor does not drive the axle and the wheel to rotate while the drive motor is driving the compressor.

In a possible implementation, after the drive motor drives the compressor to operate, the method further includes: When the temperature of the battery is lower than or equal to the first temperature threshold or the temperature of the drive motor is higher than or equal to the second temperature threshold, the drive motor stops operating; and the first power disengagement apparatus disengages the transmission engagement between the drive motor and the compressor.

In a possible implementation, after the first power disengagement apparatus disengages the transmission engagement between the drive motor and the compressor, the method further includes: The second power disengagement apparatus configures an engagement status between the drive motor and the axle to be restored to an initial state, where the initial state is an engagement status between the drive motor and the axle before the drive motor drives the compressor to operate. After the drive motor stops operating, the engagement status between the drive motor and the axle is restored to the initial state. For example, before the drive motor drives the compressor, the drive motor engages the axle. When the drive motor is driving the compressor, the transmission engagement between the drive motor and the axle is disengaged to ensure safety. Therefore, after the drive motor stops driving the compressor to operate, the transmission engagement between the drive motor and the axle needs to be restored.

According to a third aspect, an embodiment of this application further provides a new energy vehicle. The new energy vehicle includes a vehicle control unit and the refrigeration system provided in any one of the possible implementations of the first aspect, and the vehicle control unit is configured to control operating of the refrigeration system.

### BRIEF DESCRIPTION OF DRAWINGS

FIG. 1 is a diagram of a new energy vehicle according to an embodiment of this application;
FIG. 2 is a diagram of a direct-cooling heat dissipation system according to an embodiment of this application;
FIG. 3 is a diagram of a refrigeration system according to an embodiment of this application;
FIG. 4 is a diagram of another refrigeration system according to an embodiment of this application;
FIG. 5 is a diagram of still another refrigeration system according to an embodiment of this application;
FIG. 6 is a diagram of yet another refrigeration system according to an embodiment of this application;
FIG. 7 is a control block diagram of a refrigeration system according to an embodiment of this application; and
FIG. 8 is a schematic flowchart of a control method according to an embodiment of this application.

### DESCRIPTION OF EMBODIMENTS

The following describes the technical solutions in embodiments of this application with reference to the accompanying drawings in embodiments of this application. In this application, "at least one" means one or more, and "a plurality of" means two or more. The term "and/or" describes an association relationship between associated objects and represents that three relationships may exist. For example, A and/or B may represent the following case: Only A exists, both A and B exist, and only B exists, where A and B may be singular or plural. The term "at least one of the following items (pieces)" or a similar expression thereof means any combination of these items, including a single item (piece) or a plurality of items (pieces). For example, at least one item (piece) of a, b, or c may indicate: a, b, c, a and b, a and c, b and c, or a, b, and c, where a, b, and c may be singular or plural.

In embodiments of this application, words such as "first" and "second" are used to distinguish between objects with similar names or functions or effects. A person skilled in the art may understand that the words such as "first" and "second" do not limit a quantity and an execution sequence. The term "coupling" is used for representing an electrical connection, including a direct connection through a wire or a connection end or an indirect connection through another device. Therefore, "coupling" should be considered as generalized electronic communication connection.

It should be noted that in this application, the term such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

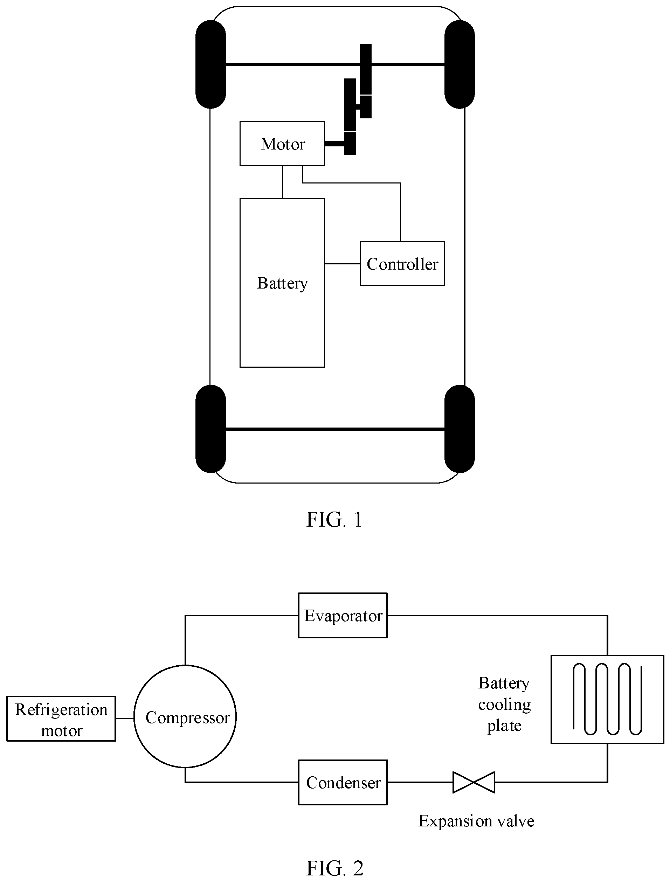

The solutions provided in embodiments of this application are applicable to a new energy vehicle. The new energy vehicle is usually a vehicle driven in a motor-driven manner, and may be a pure electric vehicle, or may be a range extended electric vehicle or a hybrid electric vehicle. FIG. 1 is a diagram of a new energy vehicle according to an embodiment of this application. The new energy vehicle may include a motor, a controller, and a battery. The controller may control the battery to supply power to the motor. The battery may be used as a drive power supply of the new energy vehicle. During charging, electric energy is converted into chemical energy for storage. During discharging, chemical energy is converted into electric energy to supply drive power to the new energy vehicle. The motor engages a traveling mechanism (for example, a wheel) through a transmission apparatus, and the motor may convert electric energy supplied by the battery into mechanical energy, thereby driving the vehicle to travel.

The battery and the motor both generate heat during use and operation. If the generated heat is not dissipated in a timely manner, the heat accumulates and consequently a temperature increases. If the temperature is too high, the operation of the battery and the motor may be affected, resulting in potential safety hazards. A motor cooling loop and a battery cooling loop are usually disposed in the new energy vehicle. The motor cooling loop is configured to dissipate heat for the motor, and the battery cooling loop is configured to dissipate heat for the battery.

With rapid development of battery technologies, requirements on a battery charging speed are also increasingly high. A fast charging technology can charge the battery to a fully charged state or a high battery state of charge (state of charge, SOC) in a short time, so that charging time and costs in using the new energy vehicle can be reduced. Currently, the fast charging technology is also one of technologies commonly used in new energy vehicles.

A battery charging process is used as an example. In the charging process, if heat generated by the battery is not dissipated to outside the battery in a timely manner and a specified temperature is exceeded, a battery management system reduces charging power of the battery for consideration of safe use of the battery. To ensure normal progress of the charging process, a heat dissipation system or a refrigeration system is needed to dissipate heat for the battery and cool the battery. Generally, a manner such as natural cooling, air cooling, liquid cooling, or direct cooling is employed to cool the battery.

FIG. 2 is a diagram of a direct-cooling heat dissipation system according to an embodiment of this application. Direct cooling means that a refrigerant or a cooling medium is employed and brought into an evaporator inside a battery to cool the battery. The direct-cooling heat dissipation system includes a refrigeration motor, a compressor, a condenser, an expansion valve, a battery cooling plate, and the evaporator. The compressor compresses a gaseous refrigerant into a high-temperature and high-pressure gaseous refrigerant, and sends the high-temperature and high-pressure gaseous refrigerant to the condenser for heat release and cooling. After cooling, the refrigerant becomes a medium-temperature and high-pressure liquid refrigerant. The liquid refrigerant is throttled by the expansion valve to become low-temperature and low-pressure liquid. The liquid refrigerant is vaporized after the battery cooling plate and the evaporator absorb heat from the battery, and then returns to the compressor to continue to be compressed, and to continue to be circulated for refrigeration.

During fast charging, the battery is charged with high charging power in a short time. Therefore, in a fast charging scenario, the battery generates a larger amount of heat, and a refrigeration or heat dissipation capability of an original heat dissipation system may not satisfy a heat dissipation requirement, calling for a refrigeration or heat dissipation system with higher efficiency and higher refrigeration power.

In a possible implementation, during charging, a refrigeration loop on a charging pile is employed to cool the battery of the new energy vehicle for heat dissipation and cooling. To be specific, a refrigerant and the refrigeration loop are added to the charging pile, so that during charging, the vehicle can dissipate heat through the refrigeration loop of the charging pile. However, in this method, the charging pile needs to be reconstructed first, and then the refrigeration loop of the vehicle needs to be reconstructed, so that the vehicle can dissipate heat through the refrigeration loop of the charging pile during charging. With participation of the external refrigeration loop, this method can improve refrigeration power of a thermal management system of the vehicle. However, this heat dissipation system not only requires the charging pile to provide a corresponding interface, but also relates to thermal management loop connection. There are risks such as liquid leakage and air admission. In addition, various types of refrigerants cannot be mixed, and it is difficult to directly connect the entire vehicle to the refrigeration loop of the charging pile.

In another possible implementation, heat is dissipated for the battery through the motor cooling loop of the new energy vehicle. In this method, a fan cooler in the motor cooling loop and a fan cooler in the battery cooling loop are connected in series in a charging process, and the fan cooler in the motor cooling loop is used in the charging process to accelerate refrigeration, so that the thermal management system is fully utilized. However, in this method, in a fast charging scenario, a heat dissipation capability of a fan is limited and there is a loss of heat transfer efficiency due to a plurality of rounds of heat exchange, heat dissipation efficiency of the fan cooler in the fast charging scenario is very low. In addition, a problem of excessive noise may exist.

For some new energy vehicles, battery swapping is feasible, that is, a power battery is swapped at a battery swap station. In this case, the battery with insufficient power is first removed from a new energy vehicle for charging. During charging, an additional water chiller may be employed to dissipate heat for the battery being charged. This method can detect and control a temperature of the battery. When an excessively high temperature of the battery is detected, the additional water chiller is started to dissipate heat and cool the battery. However, this method is applicable only to a scenario of charging at a battery swap station.

Although the foregoing manners can enhance heat dissipation of the battery, the heat dissipation requirement in the fast charging scenario may still not be satisfied. In addition, application scenarios of the foregoing manners are limited with high costs, and the requirement cannot be satisfied. To resolve the problem that the refrigeration system cannot satisfy the heat dissipation requirement, this application provides a new refrigeration system. In a charging or fast charging scenario, mainly the battery generates a large amount of heat, the vehicle is at a standstill, and the drive motor does not operate and does not generate a large amount of heat. Therefore, in the fast charging scenario, the drive motor may take the place of the refrigeration motor in the refrigeration loop to drive the compressor in the refrigeration loop, thereby increasing a refrigerant flow rate, improving refrigeration power, and accelerating heat dissipation of the battery.

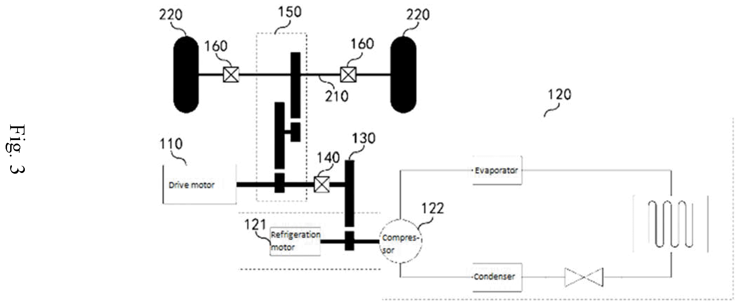

The following describes the refrigeration system provided in embodiments of this application with reference to the accompanying drawings. Refer to FIG. 3. FIG. 3 is a diagram of a refrigeration system according to an embodiment of this application. The refrigeration system includes a drive motor 110 and a refrigeration loop 120. The drive motor 110 is a power mechanism of a new energy vehicle. The drive motor 110 is in transmission engagement with a traveling mechanism (for example, a wheel 220) of the new energy vehicle. The drive motor 110 may convert electric energy supplied by a power battery into mechanical energy, thereby driving the wheel 220 to travel.

The refrigeration loop 120 herein may be a battery cooling loop, and the refrigeration loop 120 includes a refrigeration motor 121 and a compressor 122. The refrigeration motor 121 engages the compressor 122, and the refrigeration motor 121 may drive the compressor 122 to operate to compress a refrigerant for heat exchange, thereby dissipating heat for the battery.

The refrigeration system provided in this embodiment of this application further includes a first transmission apparatus 130 and a first power disengagement apparatus 140. The drive motor 110 is further in transmission engagement with the compressor 122 through the first transmission apparatus 130, so that the drive motor 110 may drive the compressor 122 to operate. The first power disengagement apparatus 140 is configured to cause the drive motor 110 and the compressor 122 to switch between a transmission engagement state and a transmission disengagement state. When the drive motor 110 and the compressor 122 are in the transmission engagement state, the drive motor 110 can drive the compressor 122 to operate. When the drive motor 110 and the compressor 122 are in the transmission disengagement state, the drive motor 110 cannot drive the compressor 122 to operate but the refrigeration motor 121 can drive the compressor 122 to operate.

The drive motor 110 is a power apparatus of the new energy vehicle, and can drive the entire new energy vehicle to travel. The refrigeration motor 121 is configured only to drive the compressor 122 to dissipate heat for the battery. In general, output power of the refrigeration motor 121 is usually less than output power of the drive motor 110.

When the battery is being charged, for example, in a fast charging scenario, the battery generates a large amount of heat, and the refrigeration motor 121 in the refrigeration loop may not satisfy a heat dissipation requirement even if the refrigeration motor 121 goes all out to operate. However, in a charging scenario, the new energy vehicle is at a standstill and the drive motor 110 does not need to drive the wheel 220 to travel. Therefore, the drive motor 110 with higher power may be considered, to drive the compressor 122 in the refrigeration loop 120, thereby increasing refrigeration power and quickly cooling the battery.

In the solution provided in this embodiment of this application, the first power disengagement apparatus 140 is further disposed between the drive motor 110 and the compressor 122 in the refrigeration loop 120. The first power disengagement apparatus 140 may cause the drive motor 110 and the compressor 122 to switch to the transmission engagement state, or to the transmission disengagement state to break the engagement. For example, when the battery generates a small amount of heat, for example, in a non-charging scenario or a non-fast charging scenario, the refrigeration motor 121 drives the compressor 122 to perform refrigeration to satisfy a heat dissipation requirement. In this case, the first power disengagement apparatus 140 may disengage the transmission engagement between the drive motor 110 and the compressor 122. When the battery generates a large amount of heat, for example, in a fast charging scenario, the heat dissipation requirement cannot be satisfied if the refrigeration motor 121 drives the compressor 122 to perform refrigeration. In this case, the first power disengagement apparatus 140 may cause the drive motor 110 and the compressor 122 to switch to the transmission engagement state, so that the drive motor 110 drives the compressor 122 to perform refrigeration, thereby improving refrigeration power and enhancing a heat dissipation capability.

In the new energy vehicle, a main task of the drive motor 110 is still to drive the wheel 220, thereby driving the vehicle to travel. In the solution provided in this embodiment of this application, to prevent the drive motor 110 from driving the wheel 220 to travel while the drive motor 110 is driving the compressor 122 in a charging case or the like, a power disengagement apparatus is disposed between the drive motor 110 and an axle 210. When the drive motor 110 is in transmission engagement with the compressor 122, transmission engagement between the drive motor 110 and the axle 210 can be disengaged, to ensure that the drive motor 110 does not drive the axle 210 or the wheel 220 to rotate while the drive motor 110 is driving the compressor 122 to operate.

For example, the refrigeration system provided in this embodiment of this application further includes a second transmission apparatus 150 and a second power disengagement apparatus 160. The drive motor 110 is in transmission engagement with the axle 210 through the second transmission apparatus 150, and the wheel 220 engages the axle 210, so that the drive motor 110 can drive the axle 210 and the wheel 220 to rotate, thereby driving the vehicle to travel.

The second power disengagement apparatus 160 may configure an engagement status between the drive motor 110 and the second power disengagement apparatus 160. For example, the second power disengagement apparatus 160 configures the drive motor 110 and the axle 210 to be in transmission engagement or out of the transmission engagement between the drive motor 110 and the axle 210.

For example, in a traveling process of the vehicle, the second power disengagement apparatus 160 configures the drive motor 110 to be in transmission engagement with the axle 210, so that the drive motor 110 can drive the axle 210 to drive the wheel 220 to rotate, thereby driving the vehicle to travel. When the vehicle has stopped and is in a charging case (for example, fast charging) or the like, if the battery needs to dissipate a large amount of heat and the refrigeration loop 120 cannot satisfy the requirement but the drive motor 110 needs to drive the compressor 122 to operate, the second power disengagement apparatus 160 may configure the drive motor 110 to disengage the transmission engagement with the axle 210, thereby preventing the drive motor 110 from driving the axle 210 and the wheel 220 to rotate while the drive motor 110 is rotating. In this case, the first power disengagement apparatus 140 configures the drive motor 110 to be in transmission engagement with the compressor 122, and the second power disengagement apparatus 160 disengages the transmission engagement between the drive motor 110 and the axle 210.

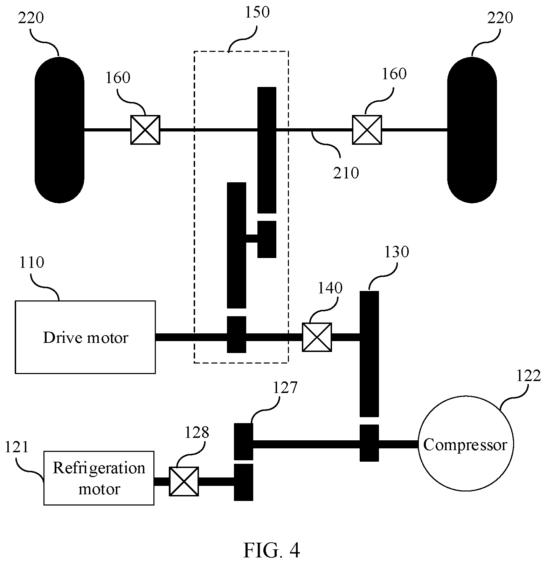

In some possible implementations, as shown in FIG. 4, the refrigeration motor 121 is in transmission engagement with the compressor 122 through a third transmission apparatus 127. For example, the third transmission apparatus 127 may be a transmission apparatus in a manner such as gear transmission, belt transmission, or chain transmission.

To prevent the drive motor 110 from driving the refrigeration motor 121 to rotate while the drive motor 110 is driving the compressor 122, a third power disengagement apparatus 128 may be disposed between the refrigeration motor 121 and the compressor 122. The third power disengagement apparatus 128 may configure the refrigeration motor 121 and the compressor 122 to be in the transmission engagement state or the transmission disengagement state. For example, when the refrigeration motor 121 needs to drive the compressor 122, the third power disengagement apparatus 128 configures the refrigeration motor 121 to be in transmission engagement with the compressor 122. When the refrigeration motor 121 does not need to drive the compressor 122, the third power disengagement apparatus 128 disengages the transmission engagement between the refrigeration motor 121 and the compressor 122.

In addition, in some cases, the refrigeration motor 121 may be an asynchronous motor. When the drive motor 110 drives the compressor 122, the transmission engagement between the refrigeration motor 121 and the compressor 122 does not need to be disengaged, but only a power supply of the refrigeration motor 121 needs to be cut off. In this case, the third power disengagement apparatus may not be disposed; or the third power disengagement apparatus and the third transmission apparatus do not need to be disposed, and the refrigeration motor 121 may coaxially engage the compressor 122.

Transmission manners of the first transmission apparatus 130, the second transmission apparatus 150, and the third transmission apparatus 127 may include gear transmission, belt transmission, chain transmission, or another transmission manner. For example, gear transmission is used as an example in embodiments of this application.

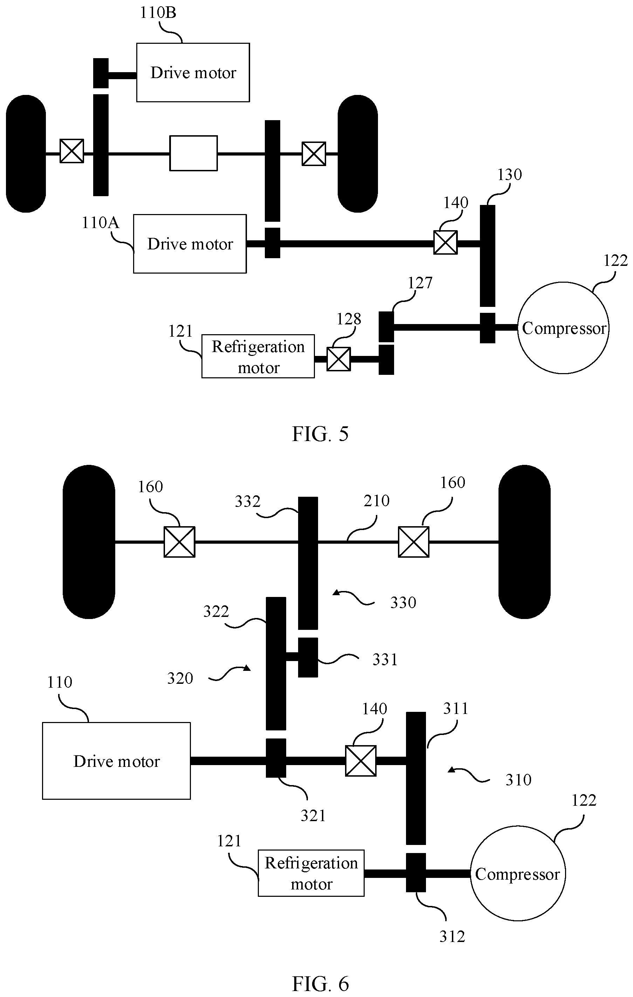

For example, as shown in FIG. 6, the drive motor 110 is in transmission engagement with the compressor 122 through a first gear set 310. The first gear set 310 includes a first gear 311 and a second gear 312. The first gear 311 is engaged with the second gear 312. The first gear 311 is a driving gear, and the second gear 312 is a driven gear. The first gear 311 coaxially engages the drive motor 110. The second gear 312 coaxially engages the compressor 122. The first power disengagement apparatus 140 may coaxially engage the drive motor 110. In this way, an engagement status between the drive motor 110 and the compressor 122 may be controlled through the first power disengagement apparatus 140.

The drive motor 110 may further be in transmission engagement with the axle 210 through a second gear set 320 and a third gear set 330. The second gear set 320 includes a third gear 321 and a fourth gear 322. The third gear 321 is engaged with the fourth gear 322. The third gear set 330 includes a fifth gear 331 and a sixth gear 332. The fifth gear 331 is engaged with the sixth gear 332. In the second gear set 320, the third gear 321 is a driving gear, the fourth gear 322 is a driven gear, the third gear 321 coaxially engages the drive motor 110, and the fourth gear 322 coaxially engages the fifth gear 331. In the third gear set 330, the fifth gear 331 is a driving gear, the sixth gear 332 is a driven gear, the fifth gear 331 coaxially engages the fourth gear 322, and the sixth gear 332 coaxially engages the axle 210.

The third power disengagement apparatus may configure or switch the engagement status between the drive motor 110 and the axle 210. For example, the second power disengagement apparatus 160 may coaxially engage the axle 210, or the second power disengagement apparatus 160 may coaxially engage the drive motor 110.

When the vehicle has only one drive motor, for example, the vehicle includes only a front drive motor, the drive motor provided in this embodiment of this application may be the front drive motor. Alternatively, the vehicle includes only a rear drive motor, and then the drive motor provided in this embodiment of this application may be the rear drive motor. In some other cases, the vehicle may include both a front drive motor and a rear drive motor, and then the drive motor provided in this embodiment of this application may be either the front drive motor or the rear drive motor.

Alternatively, in some other possible cases, the vehicle may include more drive motors. In such cases, any one of the plurality of drive motors may be selected to drive the compressor in the refrigeration loop, for example, may be selected based on a relative position relationship between the drive motor and the compressor in the refrigeration loop; or may be selected based on a temperature, for example, a drive motor with a lowest temperature in the plurality of drive motors is selected to drive the compressor. Refer to FIG. 5. FIG. 5 shows a drive motor 110A and a drive motor 110B. The drive motor 110A engages the compressor 122 through the first transmission apparatus 130.

Alternatively, in some cases, one drive motor may be configured to drive a half of an axle, and then a power disengagement apparatus is disposed between the drive motor and the half axle; or in some cases, one drive motor is configured to drive two halves of one axle, and then a power disengagement apparatus may be disposed between the drive motor and each of the two half axles.

In addition, because the drive motor has high output power, which may exceed a bearing capacity of the compressor, an output rotational speed of the drive motor may be adjusted by reducing a rotational speed of the drive motor, adjusting a size relationship between the first gear and the second gear, and the like, to avoid damage to the compressor due to an excessively high load of the compressor.

In the foregoing example, the manner of gear transmission is used as an example. Chain transmission, belt transmission, or another transmission manner may be employed between the drive motor and the compressor and between the drive motor and the axle.

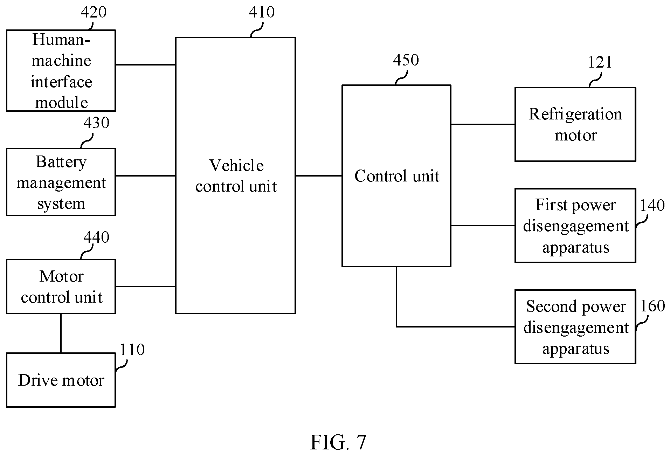

As mentioned in the foregoing example, the operating of the new energy vehicle is controlled by the controller. The controller herein is referred to as a vehicle control unit (vehicle control unit, VCU). Main functions of the vehicle control unit include coordinating and managing an operating status of the entire vehicle, including collecting a status of the motor and a status of the battery, collecting an accelerator pedal signal, a braking pedal signal, an actuator signal, and a sensor signal, and monitoring actions of controllers of lower-layer parts after a corresponding decision is made based on comprehensive analysis of a driver's intention. In addition, the new energy vehicle further includes a plurality of other controllers or processors. Refer to FIG. 7. FIG. 7 shows a control architecture of a refrigeration system according to an embodiment of this application, including a vehicle control unit 410, a human-machine interface (human machine interface, HMI) module 420, a battery management system (battery management system, BMS) 430, a motor control unit (motor control unit, MCU) 440, a control unit 450, a drive motor 110, a refrigeration motor 121, and a plurality of power disengagement apparatuses.

The human-machine interface module 420, the battery management system 430, the motor control unit 440, and the control unit 450 all engage the vehicle control unit 410. The motor control unit 440 engages the drive motor 110, and the control unit 450 engages the plurality of power disengagement apparatuses and the refrigeration motor 121. The vehicle control unit 410 may control overall operating of the refrigeration system, and may control disengagement or engagement between the drive motor 110 the axle 210 by sending an instruction; and control implementation of processes such as controlling the drive motor 110 to be disengaged from the compressor 122. The human-machine interface module 420 may provide a user interaction interface to present system-related information to a user, and may receive an instruction from the user. The battery management system 430 is configured to detect a connector insertion status, charging power, and the temperature of the battery, and may send such information to the vehicle control unit 410. The motor control unit 440 engages the drive motor 110. The motor control unit 440 may control operating of the drive motor 110 according to an instruction from the vehicle control unit 410, for example, control the drive motor 110 to operate at a target rotational speed, and detect information such as a temperature of the drive motor 110. The motor control unit 440 may further send the information such as the rotational speed and the temperature of the drive motor 110 to the vehicle control unit 410. The control unit 450 engages a first power disengagement apparatus 140, a second power disengagement apparatus 160, and the refrigeration motor 121. The control unit 450 may control operating of the first power disengagement apparatus 140, the second power disengagement apparatus 160, and the refrigeration motor 121, and send operating status information thereof to the vehicle control unit 410. For example, the first power disengagement apparatus 140 is used as an example. The first power disengagement apparatus 140 is an executor for performing disengagement and engagement between the drive motor 110 and the compressor 122; and can feed back a disengaged state or an engaged state between the drive motor 110 and the compressor 122 to the control unit 450, corresponding to the transmission disengagement state or the transmission engagement state between the drive motor 110 and the compressor 122. The control unit 450 may control, in response to an instruction from the vehicle control unit 410, the first power disengagement apparatus 140 to be disengaged or engaged, and feed back a disengaged state or an engaged state of the first power disengagement apparatus 140 to the vehicle control unit 410. The control unit 450 may further control, in response to an instruction from the vehicle control unit 410, operating of the refrigeration motor 121, and may feed back information such as an operating status of the refrigeration motor 121 to the vehicle control unit 410.

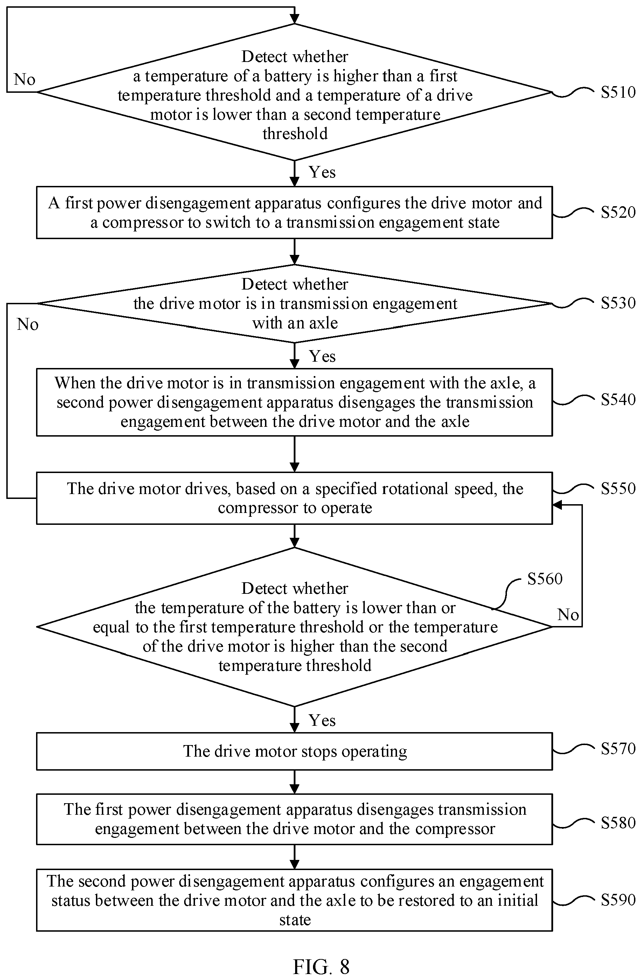

Refer to FIG. 8. FIG. 8 is a schematic flowchart of a control method for a refrigeration system according to an embodiment of this application. With reference to FIG. 7, the following describes operating principles of the refrigeration system according to this embodiment of this application.

S510: Detect whether a temperature of a battery is higher than a first temperature threshold and a temperature of a drive motor is lower than a second temperature threshold.

The solution provided in this embodiment of this application is applicable to a fast charging scenario. When a heat dissipation requirement is not satisfied while a compressor is driven by a refrigeration motor in a refrigeration loop, the drive motor drives the compressor to dissipate heat. Therefore, whether the temperature of the battery is higher than the first temperature threshold needs to be determined. If the temperature of the battery is low, it indicates that the heat dissipation requirement is already satisfied when the compressor is driven by the refrigeration motor, and the drive motor does not need to be employed for heat dissipation. In addition, whether the temperature of the drive motor is lower than the second temperature threshold needs to be determined. When the drive motor has been continuously operating and its temperature is high, it is not appropriate to continue to increase a load of the drive motor, because the drive motor could be damaged if the temperature of the drive motor is excessively high.

For example, the first temperature threshold may be 30°C, and the second temperature threshold may be 100°C. When the temperature of the battery is higher than 30°C and the temperature of the drive motor is lower than 100°C, the drive motor may be started to drive the compressor and enhance a heat dissipation capability, and S520 is performed. Otherwise, the drive motor does not need to be started to dissipate heat, but a state in which the refrigeration motor drives the compressor to dissipate heat is maintained, and the temperature of the battery and the temperature of the drive motor continue to be detected.

S520: A first power disengagement apparatus configures the drive motor and the compressor to switch to a transmission engagement state.

When the temperature of the battery is higher than the first temperature threshold and the temperature of the drive motor is lower than the second temperature threshold, the drive motor may be controlled to start, to drive the compressor to dissipate heat. Herein, the first power disengagement apparatus needs to first configure the drive motor and the compressor to switch to the transmission engagement state. In this way, after the drive motor is in transmission engagement with the compressor, the drive motor may drive the compressor to operate.

However, before the drive motor drives the compressor to operate, it needs to be ensured that the drive motor is already disengaged from an axle, to prevent the drive motor from driving the axle and a wheel to rotate while the drive motor is driving the compressor.

S530: Detect an engagement status between the drive motor and the axle, and record a current engagement status as an initial state.

Before the drive motor is started to dissipate heat, the engagement status between the drive motor and the axle needs to be detected and recorded as an initial state, so that the state can be restored subsequently after heat dissipation is complete. The initial state herein may include: a state in which the drive motor is in transmission engagement with the axle, or a state in which the transmission engagement between the drive motor and the axle is disengaged.

If the drive motor is in transmission engagement with the axle, the transmission engagement between the drive motor and the axle needs to be disengaged to prevent the drive motor from driving the axle and the wheel to rotate while the drive motor is driving the compressor, and S540 is performed.

If the transmission engagement between the drive motor and the axle is disengaged, the drive motor does not drive the axle to rotate, and S550 is performed.

S540: When the drive motor is in transmission engagement with the axle, a second power disengagement apparatus disengages the transmission engagement between the drive motor and the axle.

S550: The drive motor drives, based on a specified rotational speed, the compressor to operate.

For example, a vehicle control unit may send an instruction to a control unit. The control unit controls, based on the instruction from the vehicle control unit, the first power disengagement apparatus to configure the drive motor and the compressor to be in the transmission engagement state; and may control, based on the instruction from the vehicle control unit, the second power disengagement apparatus to disengage the drive motor from the axle. Then, the control unit may control, based on the instruction from the vehicle control unit, the drive motor to operate at the specified rotational speed. Herein, the rotational speed of the drive motor may be set based on the temperature of the battery and a rotational speed that can be borne by the compressor. This ensures that the heat dissipation requirement of the battery can be effectively satisfied, and also prevents the rotational speed of the compressor from being excessively high to damage the compressor.

After the drive motor is in transmission engagement with the compressor, the control unit may control the refrigeration motor to stop operating. Alternatively, in another case, a third power disengagement apparatus is disposed between the refrigeration motor and the compressor, and the control unit may control the third power disengagement apparatus to disengage transmission engagement between the refrigeration motor and the compressor, and control the refrigeration motor to stop operating.

S560: Detect whether the temperature of the battery is lower than or equal to the first temperature threshold or the temperature of the drive motor is higher than the second temperature threshold.

Output power of the drive motor is greater than output power of the refrigeration motor. Using the drive motor to take the place of the refrigeration motor to drive the compressor to operate can improve refrigeration efficiency and enhance the heat dissipation capability. Therefore, after the drive motor is started to drive the compressor, the temperature of the battery decreases, but the temperature of the drive motor rises because heat is generated during operating of the drive motor. When the temperature of the battery is lower than the first temperature threshold, it indicates that the temperature of the battery has already decreased to such an extent that the refrigeration motor is enough to satisfy the heat dissipation requirement. On the contrary, it indicates that currently heat dissipation does not satisfy the heat dissipation requirement, and the drive motor needs to continuously drive the compressor to operate to dissipate heat. If the temperature of the battery is lower than or equal to the first temperature threshold, it indicates that the heat dissipation requirement of the battery is already satisfied, heat dissipation power may be reduced, and the drive motor does not need to continue to drive the compressor. In addition, if the temperature of the drive motor is higher than the second temperature threshold, it indicates that the load of the drive motor is heavy, and a fault may occur due to an excessively high temperature of the drive motor if the drive motor continues to operate.

If the temperature of the battery is lower than or equal to the first temperature threshold or the temperature of the drive motor is higher than the second temperature threshold, S570 is performed. Otherwise, S560 continues to be performed, and the drive motor continuously drives the compressor to dissipate heat for the battery.

S570: The drive motor stops operating.

When the temperature of the battery is lower than the first temperature threshold or the temperature of the drive motor is higher than the second temperature threshold, the drive motor is controlled to stop operating. For example, the vehicle control unit may send an instruction to the motor control unit, and the motor control unit controls, based on the instruction from the vehicle control unit, the drive motor to stop operating.

S580: The first power disengagement apparatus disengages the transmission engagement between the drive motor and the compressor.

After controlling the drive motor to stop operating, the vehicle control unit may further send an instruction to the control unit, to control the drive motor to disengage the transmission engagement with the compressor. For example, in response to the instruction from the vehicle control unit, the control unit controls the first power disengagement apparatus to disengage the transmission engagement between the drive motor and the compressor.

S590: The second power disengagement apparatus configures the engagement status between the drive motor and the axle to be restored to the initial state.

After the compressor stops operating, the drive motor disengages the transmission engagement with the compressor, and disengages the engagement with the axle. In this case, the engagement status between the drive motor and the axle may be controlled to be restored to the initial state. For example, the initial state is a state in which the transmission engagement between the drive motor and the axle is disengaged. In this case, the engagement status between the drive motor and the axle does not need to be adjusted. In another case, the initial state is a state in which the drive motor is in transmission engagement with the axle, but the drive motor is disengaged from the axle when the drive motor drives the compressor. Therefore, the transmission between the drive motor and the axle needs to be restored. For example, the vehicle control unit sends an instruction to the control unit; and in response to the instruction from the vehicle control unit, the control unit controls the second power disengagement apparatus to configure the status between the drive motor and the axle to be the transmission engagement state, that is, to be restored to the initial state.

After the transmission engagement between the drive motor and the compressor is disengaged, further, the refrigeration motor may be started, so that the refrigeration motor drives the compressor to operate.

To ensure safety, in the foregoing examples, when the first power disengagement apparatus performs a disengagement or engagement action between the drive motor and the compressor, or when the second power disengagement apparatus performs a disengagement or engagement action between the drive motor and the axle, it needs to be ensured that the drive motor is in a stopped state or in a state with a low rotational speed, for example, at a rotational speed of less than 20 rpm.

In addition, in all of the foregoing examples, the vehicle at a standstill in a charging scenario is used as an example for describing the use of the drive motor to drive the compressor in the refrigeration loop to enhance the heat dissipation capability of the refrigeration loop when the heat dissipation capability of the refrigeration loop does not satisfy a requirement in the charging scenario. In some other possible implementations, the drive motor may drive the compressor in the refrigeration loop in another scenario. For example, in a traveling process of the vehicle, the drive motor is in transmission engagement with the axle to drive the axle and the wheel to rotate, thereby driving the vehicle to travel. In this case, if the temperature of the battery is high, the first power disengagement apparatus may engage the drive motor and the compressor in the refrigeration loop, so that the drive motor drives the compressor, thereby improving the refrigeration efficiency and enhancing the heat dissipation capability.

An embodiment of this application further provides a new energy vehicle. For example, the new energy vehicle may be the new energy vehicle shown in FIG. 1. The new energy vehicle includes a vehicle control unit and the refrigeration system provided in the embodiments shown in FIG. 3 to FIG. 6. The vehicle control unit is configured to control operating of the refrigeration system.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A refrigeration system, wherein the refrigeration system comprises:
a refrigeration loop, comprising a refrigeration motor and a compressor, wherein the refrigeration motor engages the compressor;
a drive motor, wherein output power of the drive motor is greater than output power of the refrigeration motor; and
a first transmission apparatus and a first power disengagement apparatus, wherein the drive motor is in transmission engagement with the compressor through the first transmission apparatus, and the first power disengagement apparatus is configured to cause the drive motor and the compressor to switch between a transmission engagement state and a transmission disengagement state.

2. The refrigeration system according to claim 1, wherein the refrigeration system further comprises a second transmission apparatus, the drive motor is in transmission engagement with an axle through the second transmission apparatus, and the axle is configured for mounting a wheel.

3. The refrigeration system according to claim 2, wherein the refrigeration system further comprises a second power disengagement apparatus, and the second power disengagement apparatus is configured to cause the drive motor and the axle to switch between a transmission engagement state and a transmission disengagement state.

4. The refrigeration system according to claim 3, wherein the second power disengagement apparatus is disposed between the drive motor and the second transmission apparatus.

5. The refrigeration system according to claim 3, wherein the second power disengagement apparatus is disposed between the second transmission apparatus and the axle.

6. The refrigeration system according to any one of claims 1 to 5, wherein the refrigeration system further comprises a third transmission apparatus and a third power disengagement apparatus, and the refrigeration motor is in transmission engagement with the compressor through the third transmission apparatus; and
the third power disengagement apparatus is configured to cause the refrigeration motor and the compressor to switch between a transmission engagement state and a transmission disengagement state.

7. The refrigeration system according to claim 2, wherein transmission manners of the first transmission apparatus and the second transmission apparatus comprise gear transmission, chain transmission, or belt transmission.

8. A control method for a refrigeration system, wherein the control method comprises:
when a temperature of a battery is higher than a first temperature threshold and a temperature of a drive motor is lower than a second temperature threshold, configuring, by a first power disengagement apparatus, the drive motor and a compressor to switch to a transmission engagement state; and
driving, by the drive motor based on a specified rotational speed, the compressor to operate.

9. The method according to claim 8, wherein before driving, by the drive motor, the compressor to operate, the method further comprises:
when the drive motor is in transmission engagement with an axle, disengaging, by a second power disengagement apparatus, the transmission engagement between the drive motor and the axle.

10. The method according to claim 8 or 9, wherein after driving, by the drive motor, the compressor to operate, the method further comprises:
when the temperature of the battery is lower than or equal to the first temperature threshold or the temperature of the drive motor is higher than or equal to the second temperature threshold, stopping, by the drive motor, operating; and
disengaging, by the first power disengagement apparatus, transmission engagement between the drive motor and the compressor.

11. The method according to claim 10, wherein after disengaging, by the first power disengagement apparatus, the transmission engagement between the drive motor and the compressor, the method further comprises:
configuring, by the second power disengagement apparatus, an engagement status between the drive motor and the axle to be restored to an initial state, wherein the initial state is an engagement status between the drive motor and the axle before the drive motor drives the compressor to operate.

12. A new energy vehicle, wherein the new energy vehicle comprises a vehicle control unit and the refrigeration system according to any one of claims 1 to 7, and the vehicle control unit is configured to control operating of the refrigeration system.
